# EUROPÄISCHE PATENTANMELDUNG

(11) **EP 0 811 429 A2**
(43) Veröffentlichungstag der Anmeldung: **10.12.1997**
(21) Anmeldenummer: 97108270.6
(22) Anmeldetag: 22.05.1997
(51) Int. Cl.: B05C 19/04

(54) **Vorrichtung zum Bestäuben eines Produkts**

(30) Priorität: 07.06.1996 DE 19622923
(71) Anmelder: Grafotec Kotterer Dry Spray GmbH, 86420 Diedorf (DE)
(72) Erfinder: Kotterer, Werner J., 86420 Diedorf (DE); Senft, Reinhold, 86420 Diedorf (DE)
(74) Vertreter: Munk, Ludwig, Dipl.-Ing.

(57) **Zusammenfassung**

Bei einer Vorrichtung zum Bestäuben eines auf einer Transporteinrichtung [1] aufgenommenen Produkts [2], insbesondere zum Bestäuben von neuem, band- oder plattenförmigem Glas, mit wenigstens einem die Transporteinrichtung [1] übergreifenden Auftragbalken [3], der einen Vorratsraum [4] mit einem bodenseitigen, über die Balkenlänge durchgehenden Auslaßspalt [6] und einr diesem zugeordneten Zuführeinrichtung aufweist, die zumindest eine antreibbare Walze [9] enthält, lassen sich dadurch Leckverluste vermeiden und ein sauberer Betrieb erreichen, daß zumindest im Bereich eines seitlichen Endes der Walze [9] mehrere nebeneinander angeordnete, jeweils einer schmalen Zone der Walze 9 zugeordnete Abdeckblenden [12] vorgesehen sind, die wahlweise in eine Abdeckstellung bringbar sind, in welcher der dem Auslaßspalt [6] zugeordnete Umfangsbereich der Walze [9] abgedeckt ist.

## Beschreibung

Die Erfindung betrifft eine Vorrichtung zum Bestäuben eines auf einer Transporteinrichtung aufgenommenen Produkts, insbesondere zum Bestäuben von band- oder plattenförmigem Glas bei der Herstellung, mit wenigstens einem die Transporteinrichtung übergreifenden Auftragbalken, der einen Vorratsraum mit einem bodenseitigen, über die ganze Balkenlänge durchgehenden Auslaßspalt und einem diesem zugeordneten Zuführeinrichtung aufweist, die zumindest eine antreibbare Walze enthält.

Bei der Herstellung von Glas wird dieses in der Regel vor der Bildung eines Stapels mit Puder bestäubt, um Kratzspuren etc. zu vermeiden. Bei den derzeit in der Glasherstellung gebräuchlichen Bestäubungsvorrichtungen eingangs erwähnter Art gelangt erfahrungsgemäß viel Puder in die Umgebung und nicht auf das Produkt, was nicht nur zu einer hohen Verschmutzung der Umgebung und damit zu einer hohen Unfallgefahr sowie zu hohen Wartungs- und Instanhaltungskosten führt, sondern auch einen vergleichsweise hohen Puderverbrauch ergibt. Der Grund hierfür ist darin zu sehen, daß bei den bekannten Anordnungen die Puderausbringung nicht formatabhängi erfolgt, sondern über der ganzen Länge des Auftragbalkens, dessen Länge der maximalen Formatbreite zuzüglich eines möglichen seitlichen Driftwegs entsprechen muß. Es wurde zwar schon versucht, dem durch die Verwendung von in den Vorratsraum einlegbaren, den Auslaßspalt teilweise verschließenden Füllkeilen zu begegnen. Diese Füllkeile müssen jedoch manuell eingelegt werden, was vielfach unterbleibt. Zudem muß vorher der Vorratsraum entleert werden, was ebenfalls unerwünscht ist. Ganz abgesehen davon ist jedoch mit Hilfe der genannten Füllkeile nur eine grobe Anpassung der Länge des Auslaßspalts an die Formatbreite möglich und ein seitlicher Driftweg überhaupt nicht berücksichtigbar.

Hiervon ausgehend ist es daher die Aufgabe der vorliegenden Erfindung, eine Bestäubungsvorrichtung eingangs erwähnter Art mit einfachen und kostengünstigen Mitteln so zu verbessern, daß Puderlekagen und damit eine Verschmutzung der Umgebung und ein Verlust an Puder weitestgehend verhindert werden.

Diese Aufgabe wird erfindungsgemäß dadurch gelöst, daß bei einer Vorrichtung gattungsgemäßer Art zumindest im Bereich eines seitlichen Endes der Walze mehrere nebeneinander angeordnete, jeweils einer schmalen Zone der Walze zugeordnete Abdeckblenden vorgesehen sind, die wahlweise in eine Abdeckstellung bringbar sind, in welcher der dem Auslaßspalt zugeordnete Umfangsbereich der Walze abgedeckt ist.

Hiermit ist es möglich, die Beaufschlagung des Auslaßspalts mit Puder einfach durch entsprechendes Verschieben der Abdeckblenden zonenweise zu aktivieren bzw. zu passivieren. Die Abdeckblenden können in vorteilhafter Weise während des Betriebs und bei gefülltem Vorratsraum schnell und einfach verschoben werden. Es ist daher möglich, die den Abdeckblenden zugeordneten Betätigungsorgane in Abhängigkeit von der mittels eines Sensors überwachbaren Seitenlage der Produkte anzusteuern, so daß eine laufende, automatische Anpassung der aktiven Länge der als Austragwalze fungierenden Walze erfolgt. Da die Abdeckblenden nur zwischen zwei Endstellungen verschoben werden müssen, ergibt sich in vorteilhafter Weise auch eine höchst einfache Bauweise. Mit den erfindungsgemäßen Maßnahmen ist ersichtlich sichergestellt, daß nur die unter dem Auftragbalken durchlaufenden Produkte bestäubt werden und kein Puder vergeudet wird. Es ist daher sichergestellt, daß die Umgebung nicht verschmutzt wird, wodurch nicht nur die hierdurch verursachte Unfallgefahr unterbleibt, sondern auch die hierdurch verursachten Reinigungsarbeiten sowie die hierdurch verursachten Beeinträchtigungen der Funktionsfähigkeit von in der Nähe angeordneten Aggregaten entfallen. Zudem ergibt sich ein sparsamer Puderverbrauch.

Vorteilahfte Ausgestaltungen und zweckmaäßige Fortbildungen der übergeordneten Maßnehmen sind in den Unteransprüchen angegeben. So können die Abdeckblenden zweckmäßig als zum Umfang der Walze konzentrische, aus dem die Walze teilweise übergreifenden Wandbereich des Vorratsraums ausfahrbare Ringsegmente ausgebildet sein, die jeweils an einem auf einer zum Umfang der Walze konzentrischen, stationären Führung bewegbaren Schlitten aufgenommen sind. Hiermit lassen sich eine besonders schonende und exakte Betriebsweise sowie besonders kurze Ansprechzeiten erreichen.

Eine weitere vorteilhafte Maßnahme kann darin bestehen, daß die Abdeckblenden gruppenweise auf einem die zugeordneten Führungs- und Betätigungseinrichtungen enthaltenden Träger aufgenommen sind, der als Einschubteil in eine unterhalb eines die Walze übergreifenden Wandbereichs des Vorratsraums vorgesehene Einschubkammer des Auftragbalkens einsetzbar ist. Dies ermöglicht eine einfache Vormontage jeweils einer ganzen Abdeckblendengruppe und erleichtert auch die Wartung und Instandhaltung dieser ganzen Gruppe.

Vorteilhaft kann die Walze zur Bildung des Auslaßspalts mit einer an der gegenüberliegenden Wand des Zuführschachts befestigten Streifenbürste zusammenwirken, an welche die Abdeckblenden anstellbar sind. Hierdurch ergibt sich eine zuverlässige Absperrung des Auslaßspalts bei in die Abdeckstellung gebrachten Abdeckblenden. Dennoch ist in Folge der großen Elastizität der Bürsten eine Schonung der Walzenoberfläche gewährleistet.

Eine weitere vorteilhafte Maßnahme kann darin bestehen, daß am unteren Rand des Auftragbalkens ein durch Bürsten begrenzter Rahmen vorgesehen ist. Dieser ergibt in vorteilhafter Weise eine gewisse Kanalisierung des ausgebrachten Puders und verhindert, daß dieser durch Zugerscheinungen etc. seitlich verblasen werden kann.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung entnehmbar.

In der Zeichnung zeigen:
- Figur 1: eine Seitenansicht einer erfindungsgemäßen Bestäubungsvorrichtung teilweise im Schnitt,
- Figur 2: einen Schnitt durch den Auftragbalken der erfindungsgemäßen Bestäubungsvorrichtung in gegenüber Figur 1 vergrößerter Darstellung und
- Figur 3: eine schematische Draufsicht auf die erfindungsgemäße Bestäubungsvorrichtung.

Die den Zeichnungen zugrundeliegende Bestäubungsvorrichtung kann beispielsweise in eine Produktionsstraße zur Herstellung von Glasplatten integriert sein. Diese werden in an sich bekannter Weise vor der Bildung eines aus mehreren Platten bestehenden Stapels zur Vermeidung von Kratzspuren etc. auf einer Seite mit geeignetem Puder bestäubt.

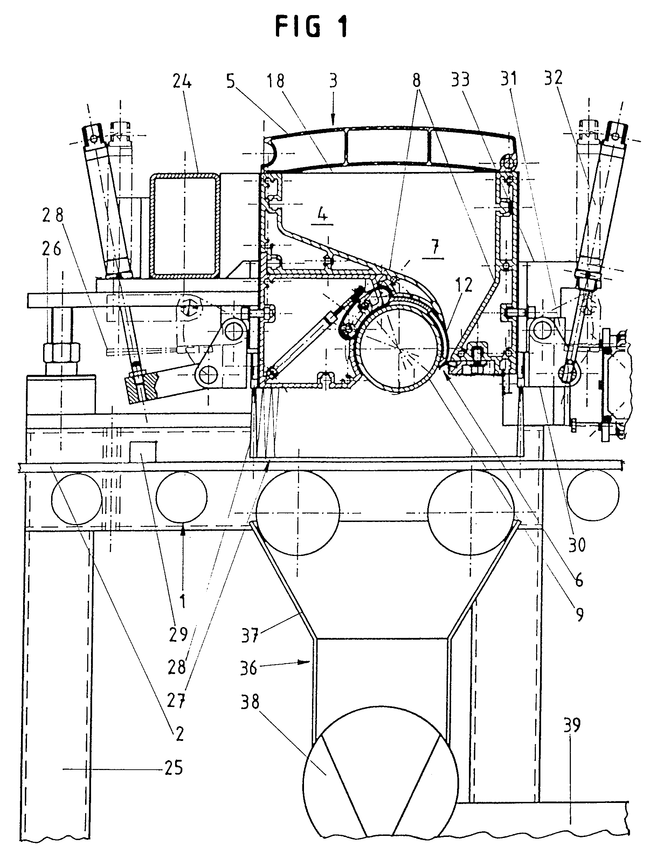

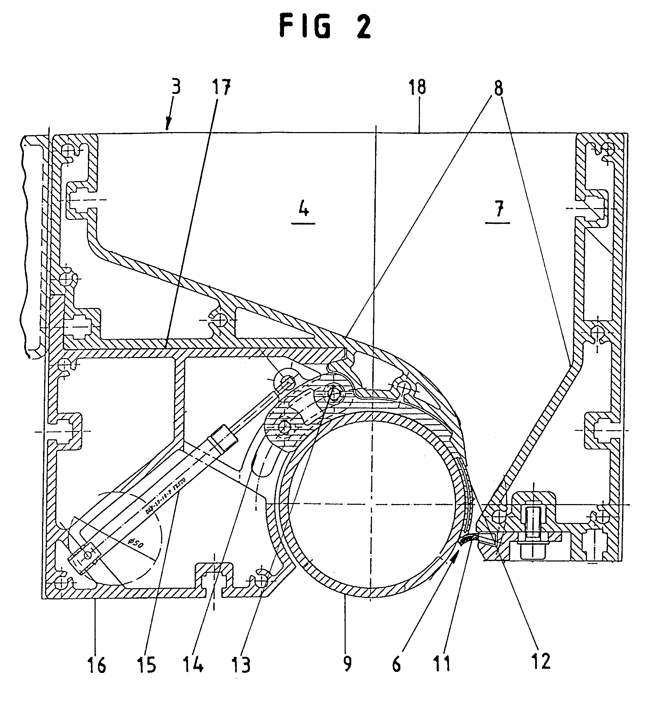

Die Figur 1 zeigt eine hier als Rollengang ausgebildete Transporteinrichtung 1, auf der mit oder ohne Abstand aufeinanderfolgende Glasplatten 2 transportiert werden. Zum Bestäuben der Glasplatten 2 ist ein die Transporteinrichtung 1 mit Abstand übergreifend angeordneter, über die Breite der Transporteinrichtung 1 durchgehender Auftragbalken 3 vorgesehen. Dieser enthält, wie aus Figur1 und 2 erkennbar ist, einen über die ganze Länge durchgehenden, mit Puder baufschlagbaren Vorratsraum 4, der oben mit einem Schwenkdeckel 5 abdeckbar ist und einen unteren, über seine ganze Länge durchgehenden Auslaßspalt 6 aufweist, über den Puder aus dem Vorratsraum 4 herausgelangt und auf die unter dem Auftragbalken 3 durchlaufende Glasplatte 2 gestreut wird.

Der Auslaßspalt 6 befindet sich am unteren Ende eines zugeordneten, im Querschnitt trichterförmigen Zuführschachts 7. Zur Bildung des Zuführschachts 7 sind V-förmig gegeneinander geneigte Wandbereiche 8 vorgesehen, die den Boden des Vorratsraums 4 bilden. Auf einer Seite des Zuführschachts 7 reicht der Wandbereich 8 bis zum Auslaßspalt 6. Der gegenüberliegende Wandbereich 8 endet mit Abstand oberhalb des Auslaßspalts 6. Der so entstehende Abstand wird durch den Umfang einer vom betreffenden Wandbereich 8 teilweise übergriffenen, über die ganze Länge des Auftragbalkens 3 durchgehenden Walze 9 überbrückt, die somit den unteren, auslaßspaltnahen Bereich einer seitlichen Begrenzung des Zuführschachts 7 bildet.

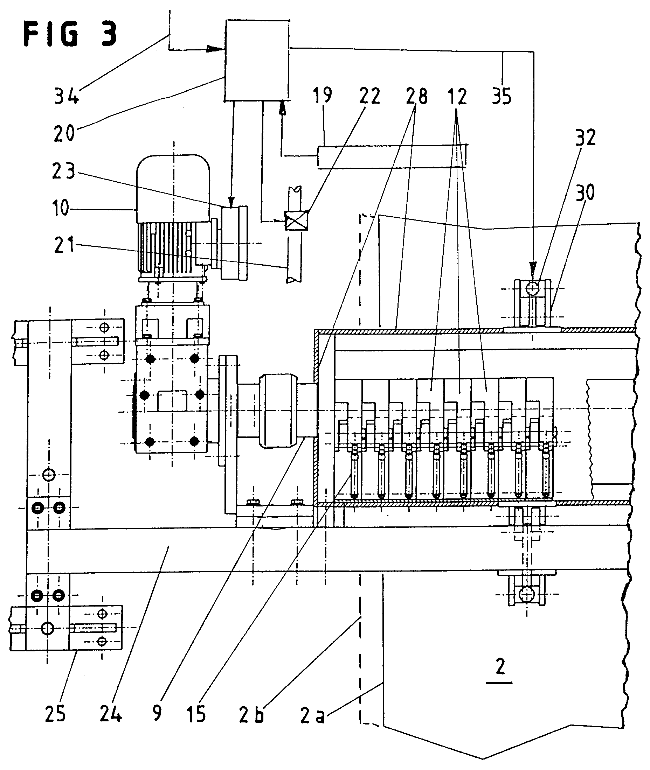

Die Walze 9 ist, am besten aus Figur 3 erkennbar ist, mittels eines Getriebemotors 10 antreibbar. Die Walze 9 fungiert als Ausbringwalze, die Puder aus dem Vorratsraum 4 mitnimmt und über den Auslaßspalt 6 ausbringt. Zur Bildung eines sehr engen Querschnitts des Auslaßspalts 6 ist die der Walze 9 gegenüberliegende Begrenzung des Zuführschachts 7, wie den Figuren 1 und 2 entnehmbar ist, mit einer mit der Walze 9 zusammenwirkenden Lippe 11, die zweckmäßig als Streifenbürste ausgebildet ist, versehen. Diese fungiert als Abstreif- und Rückhalteorgan, durch welches die Schichtdicke der auf der Walze 9 vorhandenen, den Auslaßspalt 6 passierenden Puderschicht festgelegt wird. Der Mengendurchsatz pro Zeiteinheit kann durch Änderung der Drehzahl der Walze 9 reguliert werden. Der Getriebemotor 10 ist dementsprechend eingerichtet. Zum vollständigen Unterbrechen des Puderauftrags wird die Walze 9 angehalten. Die Affinität der Walze 9 zu Puder wird durch ihre Oberflächenrauhigkeit vorgegeben. Hierdurch läßt sich daher das Niveau der von der Walze 9 transportierbaren Pudermenge einstellen. Für verschiedene Einsatzfälle werden daher Walzen mit unterschiedlicher Rauhigkeit verwendet.

Die Platten 2 können eine unterschiedliche Breite aufweisen, wie in Figur 3 verdeutlicht ist. Die Seitenkante 2a einer schmalen Platte ist dabei mit durchgezogenen Linien, die Seitenkante 2b einer breiteren Platte mit unterbrochenen Linien angedeutet. Sofern die Platten 2 mit einer Seitenkante an einer Führung entlanggeführt werden, wirkt sich der Breitenunterschied nur auf der anderen Seite aus. Sofern die Platten 2 auf der Transporteinrichtung 1 mittig transportiert werden, ergeben sich auf beiden Seiten je nach Plattenbreite unterschiedliche Positionen der Seitenkanten. Zudem kann bei mittigem Transport auch noch ein seitliches Driften der Platten 2 dazukommen.

Um außerhalb der seitlichen Randkanten der Platten 2 keinen Puder abzuwerfen, sind der Walze 9 Abdeckblenden 12 zugeordnet, die sich in Längsrichtung der Walze 9 jeweils über eine schmale Zone der Walze 9 erstrecken. Es ist denkbar, die ganze Walzenlänge mit derartigen, nebeneinander angeordneten Abdeckblenden 2 zu belegen. In der Regel genügt es jedoch, im Bereich der den seitlichen Enden der Walze 9 zugeordneten Endstücken jeweils eine Gruppe von mehreren, nebeneinander angeordneten Abdeckblenden 12 vorzusehen. Bei Anordnungen mit seitlicher Führung der Platten 2 genügt es, lediglich dem von der Führung entfernten Endstück der Walze 9 Abdeckblenden 12 zuzuordnen.

Die Abdeckblenden 12 können von einer unter den die Walze 9 teilweise übergreifenden Wandbereich 8 zurückgezogenen Stellung in eine den Figuren 1 und 2 zugrundeliegende Abdeckstellung vorgeschoben werden, in welcher der über den genannten Wandbereich 8 hinauslaufende, den unteren Bereich der Seitenwand des Zuführschachts 7 bildende Umfangsbereich der Walze 9 abgedeckt ist. Der abgedeckte Umfangsbereich der Walze 9 kann dementsprechend keinen Puder aufnehmen und über den Auslaßspalt 6 ausbringen. Es ist daher möglich, die Puderausbringung zonenweise abzusperren bzw. freizugeben. Zur Gewährleistung einer exakten Absperrung kommen die Abdeckblenden 12 in der Abdeckstellung, wie die Figren 1 und 2 zeigen, mit ihrer Vorderkante an der Lippe 11 zur Anlage.

Die Abdeckblenden 12 sind, wie die Figuren 1 und 2 weiter zeigen, als zum Umfang der Walze 9 konzentrische, aus dem die Walze 9 teilweise übergreifenden Wandbereich 8 ausfahrbare Ringsegmente ausgebildet. Diese sind mit ihrem hinteren Ende an einem zugeordneten Schlitten 13 aufgenommen, der auf einer stationären, zum Umfang der Walze 9 ebenfalls konzentrischen, bogenförmigen Führung 14 verschiebbar ist. Zur Bildung der Führung 14 ist im dargestellten Beispiel eine gestellseitig vorhandene Rippe vorgesehen, die mit einem Bogenschlitz versehen ist. In diesen greifen vom Schlitten 13 abstehende Führungsstifte ein. Die Enden des Bogenschlitzes fungieren als Anschläge, durch die die Abdeckstellung bzw. die zurückgezogene Wartestellung vorgegeben wird. Der vordere Anschlag ist zweckmäßig so positioniert, daß das vordere Ende der zugeordneten Abdeckblende 12, wie oben schon erwähnt, in der Abdeckstellung in satte Anlage an der Lippe 11 kommen kann.

Jeder aus einer Abdeckblende 12 mit zugeordnetem Schlitten 13 bestehenden Einheit ist ein Betätigungsorgan 15 zugeordnet. Da die genannten Einheiten jeweils auf Anschlag vor- und zurückgefahren werden, können die Betätigungsrogane 15 einfach als Zweipunkt-Stellglieder, hier in Form eines pneumatisch oder hydraulisch betätigbaren Stellzylinders, ausgebildet sein. Dieser ist, wie die Figuren 1 und 2 zeigen, einerseits gestellseitig abgestützt und andererseits mit dem zugeordnetn Schlitten 13 verbunden.

Alle einem seitlichen Endstück der Walze 9 zugeordneten Abdeckblenden 12 samt zugeordneten Führungs- und Betätigungsorganen sind, wie die Figren 1 und 2 weiter erkennen lassen, auf einem gemeinsamen, über die Länge des zugeordneten Endstücks sich estreckenden Träger 16 aufgenommen, der in eine zugeordnete Ausnehmung 17 des Auftragbalkens 3 eingesetzt ist. Die Ausnehmung 17 befindet sich unterhalb des die Walze 9 teilweise übergreifenden Wandbereichs 8. Zweckmäßig kann sich die Ausnehmung 17 über die ganze Länge des Auftragbalkens 3 erstrecken. Sofern im Bereich beider Endstücke der Walze 9 jeweils eine Gruppe von Abdeckblenden 12 vorgesehen ist, kann jeder einer derartigen Gruppe zugeordnete Träger 16 als Einschubteil in die als Einschubkammer fungierende Ausnehmung 17 eingeschoben werden.

Der Träger 16 kann als Abschnitt einer gezogenen Profilschiene ausgebildet sein. Hierbei ist lediglich im Bereich der Führungen 14 eine Bearbeitung erforderlich. Im dargestellten Beispiel liegt auch dem Auftragbalken 3 ein Abschnitt einer gezogenen Profilschiene zugrunde. Zur Bildung eines stirnseitigen Abschlußes der Vorratsraums 4 können dabei Stirnplatten 18 vorgesehen sein, auf denen auch die Walze 9 gelagert sein kann und die die Ausnehmung 17 stirnseitig begrenzen.

Die Druckbeaufschlagung der hier als Betätigungsorgane 15 vorgesehenen Zylinder kann manuell geschaltet werden. Im dargestellten Beispiel ist eine automatisch funktionierende Anordnung gezeigt. Hierzu ist, wie aus Figur 3 erkennbar ist, ein Sensor 19 vorgesehen, der die Position der seitlichen Randkante 2a bzw. 2b einer in die erfindungsgemäße Vorrichtung einlaufenden Platte 2 detektiert. Die Ausgangssignale des Sensors 19 werden in einem nachgeschalteten Steuergerät, beispielsweise in Form eines Rechners 20, zu Steuersignalen für in den zu den Betätigungsorganen 15 führenden Energieversorgungsleitungen 21 angeordnete Ventile 22 verarbeitet. Mit Hilfe des Sensors 19 und des Rechners 20 wird gleichzeitig ein von der Transpertgeschwindigkeit der Platten 2 abhängiges Steuersignal für den Getriebemotor 10 zur Bewerkstelligung einer dem Plattendurchsatz angepaßten Drehzahl der Walze 9 und dementsprechend zur Bewerkstelligung eines angepaßten Puderdurchsatzes geliefert, das dem Steuerkasten 23 des Getriebemotors 10 zugeführt wird. Mit Hilfe des Sensors 19 lassen sich auch Lücken zwischen aufeinanderfolgenden Platten 2 erkennen. Beim Durchgang einer Lücke unterhalb des Auslaßspaltes 6 wird die Walze 9 gestoppt. Die entsprechenden Steuersignale können ebenfalls vom Rechner 20 hervorgebracht werden.

Der Auftragbalken 3 ist, wie aus Figur 1 entnehmbar ist, an einer hierzu parallelen Traverse 24 befestigt, deren Enden auf jeweils einem die Transporteinrichtung 1 flankierenden Bock 25 aufliegt. Die Böcke 25 besitzen der Traverse 4 zugeordnete, durch Stellschrauben 26 in der Höhe verstellbare Konsolen, so daß der Auftragbalken 3 in die gewünschte Position zur Transportebene der Transporteinrichtung 1 gebracht werden kann. Am unteren Rand des Auftragbalkens 3 ist ein durch vier Flachbürsten 28 gebildeter Bürstenrahmen 27 vorgesehen. Dieser bildet einen Kanal, durch den der auf die durchlaufende Platte 2 abgeworfene Puder kanalisiert wird und der verhindert, daß dieser Puder aufgrund eines Luftzugs etc. seitlich weggetragen werden kann. Die Bürstenleisten 28 sind so angeordnet, daß ihre unteren Enden bis zur Oberseite der durchlaufenden Platte 2 reichen, auf dieser aber gerade noch nicht streifen, um den aufgebrachten Puder nicht abzukehren. Hierzu wird der ganze Auftragbalken 3 mittels der Stellschrauben 26 entsprechend eingestellt. Es wäre aber auch denkbar, die eingangsseitige Bürstenleiste 28 zum Abkehren der Plattenoberfläche an diese anzustellen und nur die ausgangsseitige Bürstenleiste 28 nicht streifen zu lassen.

Die parallel zur Förderrichtung der Transporteinrichtung 1 verlaufenden Flachbürsten 28 sind stationär angeordnet, hier einfach an den Stirnplatten 18 des Auftragbalkens 3 befestigt. Die quer hierzuverlaufenden Flachbürsten 28 sind um eine horizontale Achse schwenkbar angeordnet und können dementsprechend in eine waagrechte Position hochgeschwenkt werden, wie in Figur 1 links in strichpunktierter Form angedeutet ist. Hierdurch ist es möglich, eine auf der durchlaufenden Platte 2 vorhandene Erhöhung der etwa bei 29 angedeuteten Art den Auftragbalken 3 ohne Kontakt mit den Flachbürsten 28 passieren zu lassen. Außerdem ist es hierdurch möglich, die quer zur Förderrichtung der Transporteinrichtung 1 verlaufenden Flachbürsten 28 durch Anschlagen, vorzugsweise durch mehrmaliges Anschlagen an den die hochgestellte Stellung definierenden Anschlag abzuklopfen.

Die Kopfleisten der schwenkbaren Flachbürsten 28 sind, wie den Figren 1 und 3 entnehmbar ist, mit Lagerlaschen 30 versehen, die in zugeordnete, am Auftragbalken 3 befestigte Lagergabeln 31 eingreifen und durch entsprechende Lagerbolzen hiermit verbunden sind. Zur Durchführung des Schwenkvorgangs sind Betätigunsorgane 32, hier in Form von Zylinder-Kolbenaggregaten, vorgesehen, die an den Lagerlaschen 30 angreifen und gestellseitig, hier an vom Auftragbalken 3 abstehenden Konsolen 33 abgestützt sind. Die auf der der Traverse 24 zugeordneten Seite vorgesehenen Betätigungsorgane 32 sind so angeordnet und greifen so an den Lagerlaschen 33 an, daß Kollissionen mit der Traverse 24 unterbleiben.

Die Aktivierung der den schwenkbaren Flachbürsten 28 zugeordneten Betätigungsorgane 32 kann manuell erfolgen, wie durch einen Handeingang 34 des Rechners 20 angedeutet ist. Es ist aber auch denkbar, eine automatische Aktivierung vorzusehen. Hierzu können der Sensor 19 und der Rechner 20 so ausgebildet sein, daß Hindernisse der bei 29 angedeuteten Art erkannt und hieraus die entsprechenden Steuersignale für die Ventile in den zu den Betätigungsorganen 32 führenden Energieversorgungsleitungen gebildet werden, wie in Figur 3 mittels der Signalleitung 35 angedeutet ist.

Unterhalb der Transportebene der Transporteinrichtung 1 ist, wie aus Figur 1 ersichtlich ist, eine Entsorgungseinrichtung 36 vorgesehen, die den nach unten durchfallenden Puder auffängt und entsorgt. Die Entsorgungseinrichtung 36 ist mit einem den Bürstenrahmen 27 untergreifenden Auffangtrichter 37 versehen, dessen oberer Rand gegenüber dem inneren Rand des Bürstenrehmens 27 nach außen vorsteht. Der vom Bürstenrahmen 27 kanalisierte Puder wird somit zuverlässig aufgefangen. Im dargestellten Beispiel flankieren die in Transportrichtung vorderen und hinteren Wände des Auffangtrichters 27 ein Rollenpaar der Transporteinrichtung 1. Der untere Ausgang des Auffangtrichters 37 ist mit dem Saugstutzen eines Ventilators 38 verbunden, dem ein Staubabscheider 39 nachgeordnet ist. Durch den vom Ventilator 38 erzeugten, im Bereich des Auffangtrichters 37 wirksam werdenden Unterdruck wird ein zuverlässiger Einzug des nach unten durchfallenden Puders gewährleistet, der im Staubabscheider 39 abgeschieden wird, so daß die austretende Luft einen hohen Reinheitsgrad aufweist und eine Rückgewinnung des Puders möglich ist.

## Patentansprüche

1. Vorrichtung zum Bestäuben eines auf einer Transporteinrichtung [1] aufgenommenen Produkts [2], insbesondere zum Bestäuben von band- oder plattenförmigem Glas bei der Herstellung, mit wenigstens einem die Transporteinrichtung [1] übergreifenden Auftragbalken [3], der einen Vorratsraum [4] mit einem bodenseitigen, über die Balkenlänge durchgehenden Auslaßspalt [6] und einer diesem zugeordneten Zuführeinrichtung aufweist, die zumindest eine antreibbare Walze [9] enthält, **dadurch gekennzeichnet, daß** zumindest im Bereich eines seitlichen Endes der Walze [9] mehrere nebeneinander angeordnete, jeweils einer schmalen Zone der Walze [9] zugeordnete Abdeckblenden [12] vorgesehen sind, die wahlweise in eine Abdeckstellung bringbar sind, in welcher der dem Auslaßspalt [6] zugeordnete Umfangsbereich der Walze [9] abgedeckt ist.

2. Vorrichtung nach Anspruch 1, **dadurch gekennzeichnet, daß** die Abdeckblenden [12] als zum Umfang der Walze [9] konzentrische, aus dem die Walze [9] teilweise übergreifenden Wandbereich [8] des Vorratsraums [4] ausfahrbare Ringsegmente ausgebildet sind, die jeweils an einem auf einer zum Umfang der Walze [9] konzentrischen, stationären Führung [14] bewegbaren Schlitten [13] aufgenommen sind, der mittels eines zugeordneten Betätigungsorgans [15] vorzugsweise zwischen zwei Anschlagstellungen bewegbar ist.

3. Vorrichtung nach einem der vorhergehenden Ansprüche, **dadurch gekennzeichnet, daß** die Abdeckblenden [12] gruppenweise auf einem die zugeordneten Führungs- und Betätigungsorgane enthaltenden Träger [16] aufgenommen sind, der als Einschubteil in eine unterhalb des die Walze [9] teilweise übergreifenden Wandbereichs [8] vorgesehene Einschubkammer [17] des Auftragbalkens [3] einsetzbar ist.

4. Vorrichtung nach einem der vorhergehenden Ansprüche, **dadurch gekennzeichnet, daß** die Walze [9] zur Bildung des Auslaßspalts [6] mit einer am gegenüberliegenden Wandbereich [8] befestigten vorzugsweise als Streifenbürste ausgebildeten Lippe [11] zusammenwirkt, an die die Abdeckblenden [12] anstellbar sind.

5. Vorrichtung nach einem der vorhergehenden Ansprüche, **dadurch gekennzeichnet, daß** die Antriebsgeschwindigkeit der Walze [9] veränderbar ist.

6. Vorrichtung nach einem der vorhergehenden Ansprüche, **dadurch gekennzeichnet, daß** die den Abdeckblenden [12] zugeordneten Betätigungsorgane [15] in Abhängigkeit von der Position der seitlichen Randkanten [2a,b] des durchlaufenden Produkts [2] aktivierbar sind.

7. Vorrichtung nach einem der vorhergehenden Ansprüche, **dadurch gekennzeichnet, daß** der Auftragbalken [3] und vorzugsweise der Träger [16] jeweils als Abschnitt eines vorgeformten Profils ausgebildet sind.

8. Vorrichtung nach einem der vorhergehenden Ansprüche, **dadurch gekennzeichnet, daß** der Auftragbalken [3] gegenüber der Transportebene der Transporteinrichtung [1] höhenverstellbar angeordnet ist.

9. Vorrichtung nach einem der vorhergehenden Ansprüche, **dadurch gekennzeichnet, daß** am unteren Rand des Auftragbalkens [3] ein durch Flachbürsten [28] begrenzter Bürstenrahmen [27] vorgesehen ist, wobei vorzugsweise die quer zur Transportrichtung der Transporteinrichtung [1] verlaufenden Flachbürsten [28] hochschwenkbar sind.

10. Vorrichtung nach einem der vorhergehenden Ansprüche, **dadurch gekennzeichnet, daß** unterhalb der Transportebene der Transporteinrichtung [1] eine Entsorgungseinrichtung [36] mit einem den Bürstenrahmen [27] untergreifenden Auffangtrichter [37] vorgesehen ist.
